# EUROPÄISCHE PATENTSCHRIFT

(11) **EP 2 729 325 B1**
(45) Veröffentlichungstag und Bekanntmachung des Hinweises auf die Patenterteilung: **10.12.2014**
(21) Anmeldenummer: 12728500.5
(22) Anmeldetag: 15.06.2012
(51) Int. Cl.: B60N 2/235

(54) **BESCHLAGSYSTEM FÜR EINEN FAHRZEUGSITZ**
FITTING SYSTEM FOR A VEHICLE SEAT
SYSTÈME DE FERRURE POUR SIÈGE DE VÉHICULE

(30) Priorität: 04.07.2011 DE 102011106285; 30.09.2011 DE 202011106338 U
(43) Veröffentlichungstag der Anmeldung: 14.05.2014
(73) Patentinhaber: Johnson Controls Components GmbH & Co. KG, 67657 Kaiserslautern (DE)
(72) Erfinder: SCHÜLER, Rolf, 42579 Heiligenhaus (DE); BOSSMANNS, Bernd, 40822 Mettmann (DE); ASSMANN, Uwe, 42857 Remscheid (DE)
(74) Vertreter: Finger, Catrin
(86) Internationale Anmeldenummer: PCT/EP2012/061450
(87) Internationale Veröffentlichungsnummer: WO 2013/004471

(56) Entgegenhaltungen:
- DE-C1- 19 633 782
- DE-U1-202010 015 171

## Beschreibung

Die Erfindung betrifft ein Beschlagsystem für einen Fahrzeugsitz mit den Merkmalen des Oberbegriffs des Anspruches 1.

Ein Beschlagsystem dieser Art ist aus der DE 20 2010 015 171 U1 bekannt. Die Betätigung des Handhebels bewirkt eine Drehung der Übertragungsstange, welche wiederum beide Beschläge entgegen der Kraft der darin enthaltenen Federanordnungen entriegelt. Die (Dreh-)Momenten-Kennlinie der Federanordnungen, welche zum Sichern des verriegelten Zustandes dienen, verläuft linear, d.h. das dem Entriegelungsvorgangs entgegengesetzte Moment steigt während des Entriegelungsvorgangs mit zunehmendem Drehwinkel stark an. Zur Erhöhung des Bedienkomforts wäre ein flacherer Verlauf von Vorteil. Beispielsweise wird in der DE 196 33 782 C1 vorgeschlagen, eine Schrauben-Knick-Feder zum Sichern des verriegelten Zustandes des Beschlagsystems zu verwenden. Deren Kennlinie verläuft nahezu unabhängig vom Entriegelungsweges, so dass die dem Entriegelungsvorgang entgegengesetzte und vom dem Benutzer zu überwindende Kraft nahezu konstant bleibt. In der DE 100 38 778 B4 wird der Benutzer beim Entriegelungsvorgang durch einen Kniehebel unterstützt, welcher den Kraftaufwand verbessert.

Der Erfindung liegt die Aufgabe zu Grunde, ein Beschlagsystem der eingangs genannten Art zu verbessern. Diese Aufgabe wird erfindungsgemäß durch ein Beschlagsystem mit den Merkmalen des Anspruches 1 gelöst. Vorteilhafte Ausgestaltungen sind Gegenstand der Unteransprüche.

In einer ersten Ausführungsform der Erfindung kann mittels der zusätzlichen Formfeder, die so in das Beschlagsystem eingebaut ist, dass das von ihr erzeugte Drehmoment einer nichtlinearen Kennlinie folgt, die sich zur wenigstens näherungsweise linearen Kennlinie der innerhalb des Beschlags vorgesehenen Federanordnung zur gesamten Kennlinie addiert, die Abhängigkeit des vom Benutzer während des Entriegelungsvorgangs aufzubringenden Drehmoments vom Drehwinkel (der Übertragungsstange oder des Handhebels) eingestellt werden. Gegenüber rein linearen Feder-Kennlinien kann eine völlig andere Abstimmung der Momente im verriegelten und entriegelten Zustand eingestellt werden.

In einer zweiten Ausführungsform der Erfindung dient eine Rückstellfeder der Rückstellung des ausgelenkten Handhebels in eine Ausgangsstellung. Mittels ihres wenigstens einen Formabschnitts, der so ausgebildet und in das Beschlagsystem eingebaut ist, dass das von ihm erzeugte Drehmoment einer nichtlinearen Kennlinie folgt, die sich zur wenigstens näherungsweise linearen Kennlinie einer innerhalb des Beschlags vorgesehenen Federanordnung zu einer gesamten Kennlinie addiert, kann die Abhängigkeit des vom Benutzer während des Entriegelungsvorgangs aufzubringenden Drehmoments vom Drehwinkel (der Übertragungsstange oder des Handhebels) eingestellt werden. Gegenüber rein linearen Feder-Kennlinien kann eine völlig andere Abstimmung der Momente im verriegelten und entriegelten Zustand eingestellt werden.

Da das minimal erforderliche, schließende Moment maßgebliche Auswirkung auf die Gesamtfunktion (dynamische Lastaufnahme, Spielfreistellung, etc.) hat und die maximal ergonomischen Entriegelungskräfte nicht beliebig groß sein dürfen, würde eine lineare Kennlinie, z.B. von Spiralfedern, regelmäßig zu konstruktiven Widersprüchen und Beschränkungen des Bauraums führen. Eine parallel geschaltete, nichtlineare Kennlinie hingegen kann mit einem degressiven Verlauf die Minimalmomente erhöhen, ohne die Maximalmomente in gleichem Maße anzuheben. In der nach außen wirksamen Summe der Einzelfedermomente wird letztlich ein ergonomischer Entriegelungsvorgang erreicht. Bevorzugt ist das subjektive Gefühl des Benutzers, mit der Betätigung des Handhebels einen Schaltvorgang zwischen "verriegelt" und "entriegelt" zu erzeugen.

Die Formfeder oder mehrere Formfedern der ersten Ausführungsform bestehen im Wesentlichen aus gekrümmten Konturen - als Blatt- oder Drahtfeder-, die ihrerseits an gekrümmten Konturen eines anderen Bauteils entlang Kontakt finden, während sich die Formfeder relativ zu diesem anderen Bauteil bewegt. Da die Kombination aus Federgeometrie und Gegengeometrie letztlich sowohl die Größe der Federkraft als auch deren Wirkrichtung bestimmt, lassen sich rein geometrisch unterschiedlichste Drehmoment-Drehwinkel-Verläufe (Kennlinien) konstruieren, die dann in Summe mit der wirkenden linearen Kennlinie der Rückstellfedern einen gewünschten Verlauf der Entriegelungskraft ermöglichen. Als mögliche Positionen der Formfeder innerhalb des Beschlagsystems kommen innerhalb der gesamten Kinematikkette der am Entriegelungsvorgang beteiligten Bauteile alle Stellen in Frage, an denen bei dem vom Benutzer eingeleiteten Entriegelungsvorgang eine Relativbewegung zwischen einem vom Benutzer bewegten ersten Bauteil und einem anderen, relativ dazu feststehendem oder anders bewegtem zweiten Bauteil vorliegt. Folglich kommen eine Vielzahl von Stellen innerhalb und außerhalb des Beschlags in Frage, mit entsprechenden Vor- und Nachteilen für eine Standardkomponente. Eine solche Feder könnte im Inneren des Beschlages - beispielsweise beschlagteilfest und den Exzenter kontaktierend - generell die Kennlinie (Drehmoment-Drehwinkel-Verlauf) der gesamten Baureihe des Beschlags verändern, ebenso gut aber außerhalb des Einstellers im jeweils kunden- oder projektspezifischen Umfeld angeordnet werden, um somit individuell mit unterschiedlichen Geometrien auch individuell unterschiedliche Anforderungen an die Kennlinie zu realisieren.

Der Formabschnitt der Rückstellfeder der zweiten Ausführungsform besteht im Wesentlichen aus einer gekrümmten Kontur - vorzugsweise einer nasenförmigen Ausbuchtung -, die ihrerseits an einer gekrümmten Kontur eines anderen Bauteils entlang Kontakt findet, während sich die Rückstellfeder und dieses andere Bauteil relativ zueinander bewegen. Da die Kombination aus Federgeometrie und Gegengeometrie letztlich sowohl die Größe der Federkraft als auch deren Wirkrichtung bestimmt, lassen sich rein geometrisch unterschiedlichste Drehmoment-Drehwinkel-Verläufe (Kennlinien) konstruieren, die dann in Summe mit der wirkenden linearen Kennlinie der Federanordnung des Beschlags einen gewünschten Verlauf der Entriegelungskraft ermöglichen.

Das erfindungsgemäße Beschlagsystem wird in Fahrzeugsitzen bevorzugt zur Einstellung der Lehnenneigung eingesetzt, kann aber auch an anderen Stellen verwendet werden. Die Ausführung des Beschlags als scheibenförmige Einheit ermöglicht beliebige Winkeländerungen zwischen den Beschlagteilen durch die relative Verdrehung um die Achse. Der axiale Zusammenhalt der Beschlagteile wird bevorzugt durch einen Umklammerungsring erzeugt.

Im Folgenden sind mehrere Ausführungsbeispiele der Erfindung anhand von Zeichnungen näher erläutert. Es zeigen
- Fig. 1: eine perspektivische Ansicht einer Formfeder eines ersten Ausführungsbeispiels,
- Fig. 2: eine Teilansicht des ersten Ausführungsbeispiels in der verriegelten Ausgangsstellung,
- Fig. 3: die Ansicht von Fig. 2 in einer Zwischenstellung des Entriegelungsvorgangs,
- Fig. 4: die Ansicht von Fig. 2 in der entriegelten Endstellung,
- Fig. 5: ein Kennlinien-Diagramm des Entriegelungsmoments über dem Entriegelungswinkel des ersten Ausführungsbeispiels,
- Fig. 6: eine perspektivische Teilansicht einer ersten Version des ersten Ausführungsbeispiels, wobei der Handhebel ohne Griffteil dargestellt ist,
- Fig. 7: eine perspektivische Teilansicht einer zweiten Version des ersten Ausführungsbeispiels,

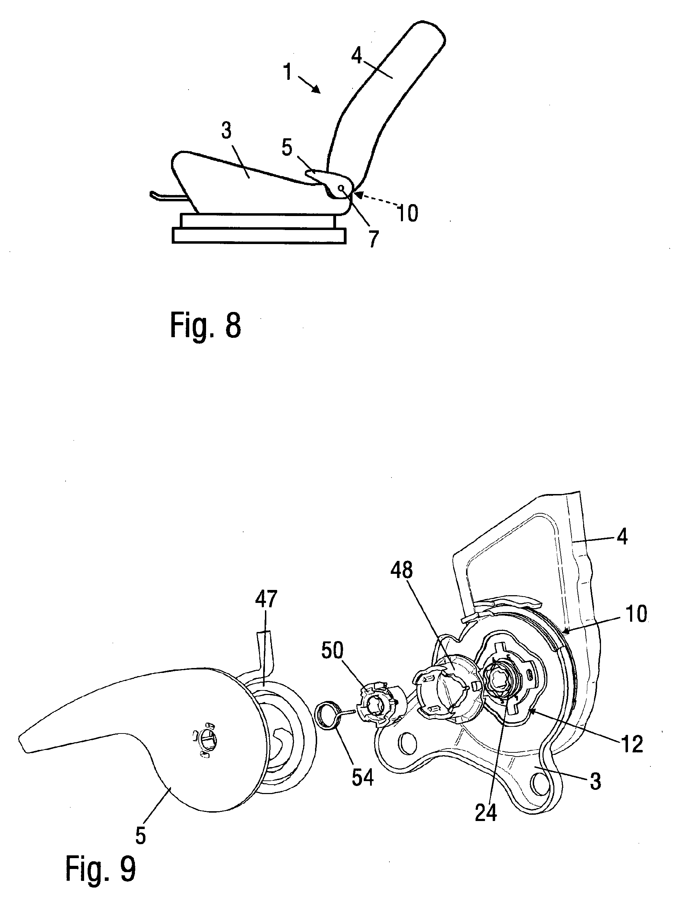

- Fig. 8: eine schematische Darstellung eines Fahrzeugsitzes,
- Fig. 9: eine perspektivische Ansicht des ersten Ausführungsbeispiels ohne Darstellung der Formfeder,
- Fig. 10: eine Explosionsdarstellung eines Beschlags ohne Darstellung der Formfeder,

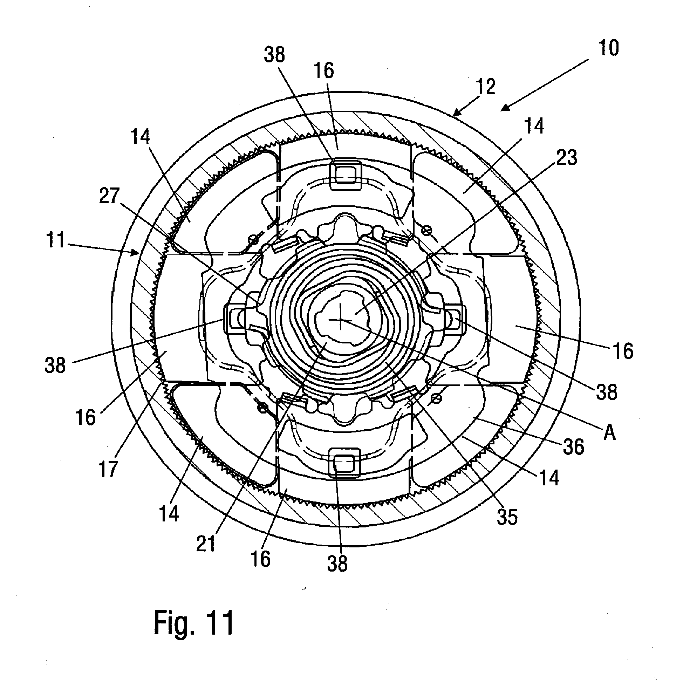

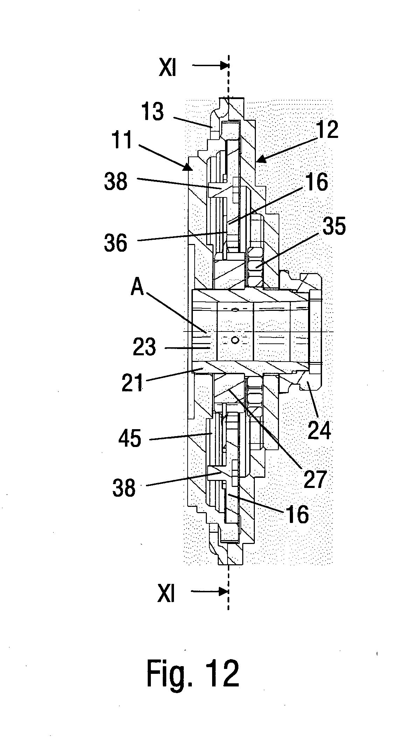

- Fig. 11: einen radialen Schnitt durch den Beschlag entlang der Linie XI-XI in Fig. 12,
- Fig. 12: einen axialen Schnitt durch den Beschlag,
- Fig. 13: eine Explosionsdarstellung von Rückstellfeder, Anschlagmodul und Handhebel eines zweiten Ausführungsbeispiels,
- Fig. 14: eine perspektivische Teilansicht von Mitnehmer, Rückstellfeder, Anschlagmodul und Handhebel eines zweiten Ausführungsbeispiels,
- Fig. 15: einen axialen Schnitt durch einen Teil von Fig. 14,
- Fig. 16: eine Innenansicht von Mitnehmer, Rückstellfeder, Anschlagmodul und Handhebel eines zweiten Ausführungsbeispiels,
- Fig. 17A: einen vergrößerten Ausschnitt von Fig. 16 in der verriegelten Ausgangsstellung,
- Fig. 17B: einen Fig. 17A entsprechenden Ausschnitt in einer Zwischenstellung des Entriegelungsvorgangs,
- Fig. 17C: einen Fig. 17A entsprechenden Ausschnitt in der entriegelten Endstellung,
- Fig. 18: ein Kennlinien-Diagramm des Entriegelungsmoments über dem Entriegelungswinkel des zweiten Ausführungsbeispiels,
- Fig. 19: einen axialen Schnitt durch Beschlag, Anschlagmodul, Handhebel und Lehnenkompensationsfeder des zweiten Ausführungsbeispiels,
- Fig. 20: einen axialen Schnitt durch Beschlag, Anschlagmodul, Handhebel und einer abgewandelt abgestützten Lehnenkompensationsfeder,
- Fig. 21: eine Explosionsdarstellung des Beschlagsystems von Fig. 20 mit schematisierter Rückstellfeder,
- Fig. 22: eine perspektivische Ansicht eines Teils des Beschlagsystems mit abgewandelt gelagertem Anschlagmodul und schematisierter Rückstellfeder,
- Fig. 23: einen axialen Schnitt durch Fig. 22,
- Fig. 24: einen axialen Schnitt durch Beschlag, Lehnenkompensationsfeder und einem einstückig mit dem Anschlagmodul ausgebildeten Handhebel des zweiten Ausführungsbeispiels, und
- Fig. 25: eine perspektivische Ansicht des einstückig mit dem Anschlagmodul ausgebildeten Handhebels.

Ein Fahrzeugsitz 1 für ein Kraftfahrzeug weist ein Sitzteil 3 und eine relativ zum Sitzteil 3 in ihrer Neigung einstellbare Lehne 4 auf. Zur Neigungseinstellung der Lehne 4 wird manuell, beispielsweise mittels eines Handhebels 5, eine Übertragungsstange 7 gedreht, welche horizontal im Übergangsbereich zwischen Sitzteil 3 und Lehne 4 angeordnet ist. Auf beiden Seiten des Fahrzeugsitzes 1 greift die Übertragungsstange 7 mit weitgehend drehfester Verbindung oder mit einem definierten Leerweg auf Mitnahme gekoppelt in einen Beschlag 10 ein.

Der Beschlag 10 weist ein erstes Beschlagteil 11 und ein zweites Beschlagteil 12 auf, welche relativ zueinander um eine Achse A verdrehbar sind. Die (gedachte) Achse A fluchtet vorliegend mit der Übertragungsstange 7 und definiert die verwendeten Richtungsangaben eines Zylinderkoordinatensystems. Die beiden Beschlagteile 11 und 12 lassen jeweils näherungsweise in eine kreisrunde Scheibenform einbeschreiben. Beide Beschlagteile 11 und 12 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 11 und 12, ist ein Umklammerungsring 13 vorgesehen. Der Umklammerungsring 13 besteht vorzugsweise aus Metall, insbesondere Stahl, der vorzugsweise ungehärtet ist. Der Umklammerungsring 13 weist vorzugsweise eine im Wesentlichen flache Ringform auf, kann aber in alternativer Ausführung L-förmig profiliert mit einem Zylinderabschnitt und stirnseitig einem flachen Ringabschnitt sein.

Der Umklammerungsring 13 ist fest mit einem der beiden Beschlagteile 11 und 12 verbunden, vorliegend in einem äußeren Ringabschnitt mit dem zweiten Beschlagteil 12, beispielsweise mittels Laserschweißens oder mittels einer anderen an sich bekannten Befestigungstechnik. Mittels eines inneren Ringabschnittes, welcher in einer zu axialen Richtung senkrechten Ebene angeordnet ist, übergreift der Umklammerungsring 13, gegebenenfalls unter Zwischenlage eines Gleitrings, das erste Beschlagteil 11 in dessen radial äußerem Randbereich, ohne die Relativbewegung der beiden Beschlagteile 11 und 12 zu behindern. Zudem werden die einander zugewandten Innenflächen der beiden Beschlagteile 11 und 12 vor dem Eindringen von Fremdkörpern und der Verschmutzung und Beschädigung geschützt.

Der Umklammerungsring 13 und das mit ihm fest verbundene Beschlagteil 11 oder 12 umklammern also das relativ zu ihnen bewegliche, andere der beiden Beschlagteile 11 und 12. In baulicher Hinsicht bilden die beiden Beschlagteile 11 und 12 daher zusammen (mit dem Umklammerungsring 13) eine scheibenförmige Einheit.

Mit der Montage des Beschlags 10 ist das erste Beschlagteil 11 beispielsweise fest mit der Struktur der Lehne 4 verbunden, also lehnenfest. Das zweite Beschlagteil 12 ist dann fest mit der Struktur des Sitzteils 3 verbunden, also sitzteilfest. Die Zuordnungen der Beschlagteile 11 und 12 können jedoch auch vertauscht sein, d.h. das erste Beschlagteil 11 wäre dann sitzteilfest und das zweite Beschlagteil 12 lehnenfest. Der Beschlag 10 liegt im Kraftfluss zwischen Lehne 4 und Sitzteil 3.

Der Beschlag 10 ist als Rastbeschlag ausgebildet, bei welchem das erste Beschlagteil 11 und das zweite Beschlagteil 12 miteinander verriegelbar sind, wie es beispielsweise in der DE 20 2009 016 989 U1 beschrieben ist, deren diesbezüglicher Offenbarungsgehalt ausdrücklich einbezogen wird.

Das zweite Beschlagteil 12 weist - vorliegend vier - Führungssegmente 14 auf, welche mit geraden Führungsflächen paarweise jeweils einen Riegel 16 seitlich in radialer Richtung führen. Die - vorliegend insgesamt vier - Riegel 16 sind - vorliegend um je 90° - versetzt zueinander in einem zwischen den beiden Beschlagteilen 11 und 12 definierten Bauraum angeordnet. Die Riegel 16 sind an ihrem radial außen liegenden Ende mit einer Verzahnung 16z versehen, die mit einem Zahnkranz 17 des als Hohlrad ausgebildeten ersten Beschlagteils 11 in Eingriff gelangen (einfallen) kann. Wenn der Zahnkranz 17 und die Riegel 16 zusammenwirken, ist der Beschlag 10 verriegelt.

Das erste Beschlagteil 11 ist in einer Vertiefung des zweiten Beschlagteils 12 angeordnet und wird durch dieses radial außen übergriffen, wodurch die beiden Beschlagteile 11 und 12 einander lagern. Dabei ist der radial äußere Randbereich des ersten Beschlagteils 11 mit dem Zahnkranz 17 in radialer Richtung zwischen den Führungssegmenten 14 und dem (der Lagerung des ersten Beschlagteils 11 dienenden) radial äußeren Randbereich des zweiten Beschlagteils 12 angeordnet. Bei hohen Belastungen, beispielsweise im Crashfall, kann das erste Beschlagteil 11 - nach einer Verformung - mit seinem Zahnkranz 17 in Anlage an die in Lastrichtung näher gelegenen Führungssegmente 14 kommen, welche in Richtung zum Zahnkranz 17 entsprechend (konzentrisch) gekrümmte Flächen aufweisen. Dies erhöht die Festigkeit des Beschlags 10.

Das erste Beschlagteil 11 kann im zweiten Beschlagteil 12 gelagert sein. Die Verhältnisse könnten aber genau umgekehrt sein, d.h. das zweite Beschlagteil 12 kann auf dem ersten Beschlagteil 11 gelagert sein. Grundsätzlich sind aber beide Anordnungen gleichwertig.

Im Zentrum des Beschlags 10 ist ein Mitnehmer 21 angeordnet, beispielsweise aus Kunststoff, welcher drehbar an wenigstens einem der beiden Beschlagteile 11 und 12, vorliegend dem ersten Beschlagteil 11, gelagert ist, genauer gesagt in einer zentralen Öffnung desselben. Auf beiden Fahrzeugsitzseiten ist der Mitnehmer 21 drehfest verbunden oder wenigstens auf Mitnahme gekoppelt mit der Übertragungsstange 7, welche in eine Bohrung 23 des hohlen Mitnehmers 21 eingeführt ist. An einem Ende des Mitnehmers 21, vorliegenden demjenigen am zweiten Beschlagteil 12, ist ein Befestigungsring 24 vorgesehen, welcher vorliegend aus Kunststoff besteht und vorzugsweise mittels Ultraschallschweißens am Mitnehmer 21 befestigt ist. Am Befestigungsring 24 kann der Handhebel 5 drehfest festgeclipst werden.

Auf dem Mitnehmer 21 sitzt drehfest oder wenigstens auf Mitnahme gekoppelt ein Exzenter 27, welcher in dem zwischen den Beschlagteilen 11 und 12 definierten Bauraum angeordnet ist. Eine Federanordnung 35, beispielsweise eine oder zwei ineinander geschachtelte Spiralfedern, ist in einer zentralen Aufnahme eines der beiden Beschlagteile 11 und 12, vorliegend des zweiten Beschlagteils 12, angeordnet und vorliegend außen abgestützt. Die Federanordnung 35 beaufschlagt den Exzenter 27, vorliegend indem sie innen drehfest auf dem Mitnehmer 21 sitzt. Eine derartige Federanordnung 35 ist beispielsweise in der bereits oben genannten DE 20 2009 016 989 U1 oder in der DE 10 2005 046 807 B3 beschrieben, deren diesbezüglicher Offenbarungsgehalt ausdrücklich einbezogen wird. Der von der Federanordnung 35 beaufschlagte Exzenter 27 wirkt auf die radial beweglichen Riegel 16 ein und beaufschlagt diese, so dass sie radial nach außen gedrückt werden, um in den Zahnkranz 17 einzufallen, womit der Beschlag 10 verriegelt ist.

Eine Steuerscheibe 36 ist im Bauraum axial zwischen den Riegeln 16 und dem ersten Beschlagteil 11 angeordnet und sitzt vorliegend drehfest auf dem Exzenter 27. Die Steuerscheibe 36 weist - vorliegend vier - Steuerbahnen auf, die jeweils mit einer Nase 38 jedes Riegels 16 zusammenwirken. Die Nasen 38 stehen dabei in axialer Richtung von den ihnen zugeordneten Riegeln 16 ab. Bei einer Drehung (um wenige Grad) des Mitnehmers 21 - und des damit angetriebenen Exzenters 27 und der Steuerscheibe 36 - entgegen der Kraft der Federanordnung 35 zieht die Steuerscheibe 36 die Riegel 16 radial nach innen, d.h. aus dem Zahnkranz 17, womit der Beschlag 10 entriegelt ist und die beiden Beschlagteile 11 und 12 relativ zueinander um die Achse A verdrehbar sind. Die Lehne 4 ist nun um die Achse A schwenkbar, um ihre Neigung einzustellen, d.h. um eine andere Gebrauchsstellung einzunehmen.

Bei zweitürigen Kraftfahrzeugen soll mittels Freischwenkens der Lehne 4 der Zugang zu einer hinteren Sitzreihe erleichtert werden, wofür die entriegelte Lehne 4 aus einer der Gebrauchsstellungen nach vorne in eine nicht zum Sitzgebrauch geeignete, freigeschwenkte Stellung geschwenkt wird. Es erhöht den Bedienkomfort, wenn der Handhebel 5 - oder ein weiteres Betätigungselement - nicht während des gesamten Freischwenkens gehalten werden muss und die Beschläge trotzdem erst in der freigeschwenkten Stellung verriegeln. Im Beschlag 10 ist hierfür zwischen der Steuerscheibe 36 und dem ersten Beschlagteil 11 um die Achse A herum optional ein ringförmiges Freischwenk-Steuerelement 45 vorgesehen, wie es beispielsweise in der DE 10 2006 015 560 B3 beschrieben ist, deren diesbezüglicher Offenbarungsgehalt ausdrücklich einbezogen wird.

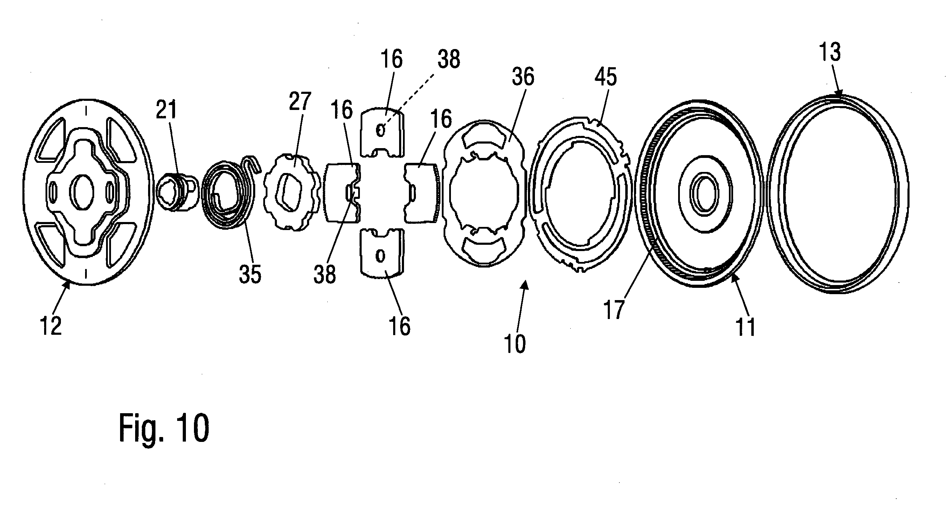

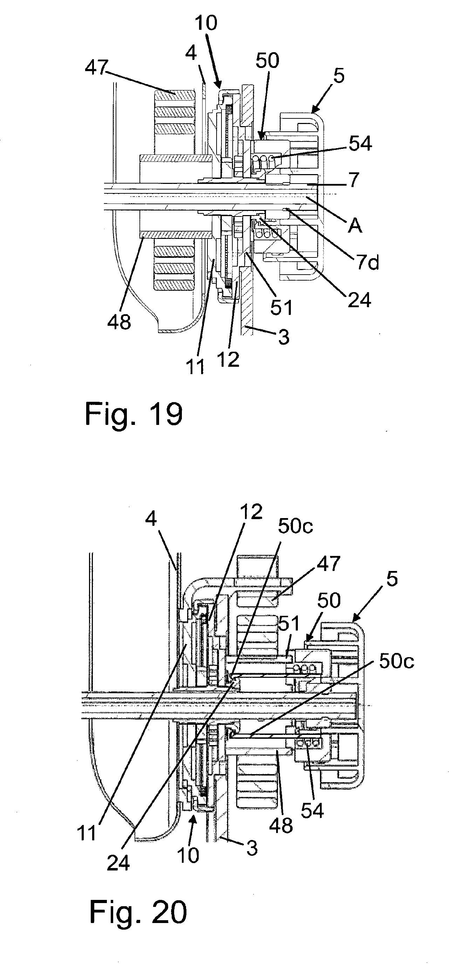

Die beiden Beschläge 10, die Übertragungsstange 7 und der Handhebel 5 sind Teile eines Beschlagsystems, zu welchem in der Regel auch wenigstens eine Lehnenkompensationsfeder 47 gehört, vorzugsweise zwei Lehnenkompensationsfedern 47, die jeweils an einem der beiden Beschläge 10 angeordnet und beispielsweise an einer Stützbuchse 48 abgestützt sind. Der Handhebel 5 kann einteilig oder mehrteilig, beispielsweise mit einem Griffteil und einem Nabenteil, ausgebildet sein. Vorzugsweise ist zwischen dem Handhebel 5 und der Übertragungsstange 7 ein Anschlagmodul 50 angeordnet, wie es beispielsweise in der DE 20 2010 015 171 U1 beschrieben ist, deren Offenbarungsgehalt ausdrücklich einbezogen wird, und die auch beschreibt, wie die Stützbuchse 48 am Beschlag 10 befestigt ist. Das Anschlagmodul 50 hat mehrere Funktionen. Es überträgt das Drehmoment von dem vom Benutzer betätigten Handhebel 5 auf die Übertragungsstange 7. Das Anschlagmodul 50 begrenzt der Winkelbereich für die Betätigung des Handhebels 5 in wenigstens eine Drehrichtung des Handhebels, indem es mit wenigstens einem Gegenanschlag 51 am Beschlag 10 (Fig. 10, Fig. 19) oder an der Stützbuchse 48 (Fig. 20 bis Fig. 24) in Anschlag gelangt, was auch als Missbrauchssicherung dient. Das Anschlagmodul 50 entklappert das Beschlagsystem, indem es mittels einer Rückstellfeder 54 eine Relativbewegung der Übertragungsstange 7 verhindert, beispielsweise gegenüber dem Mitnehmer 21, wobei die Kraft der Rückstellfeder sehr viel kleiner als diejenige der Federanordnung 35 ist. Und das Anschlagmodul 50 definiert die dem Anschlag gegenüberliegende Endlage des Handhebels.

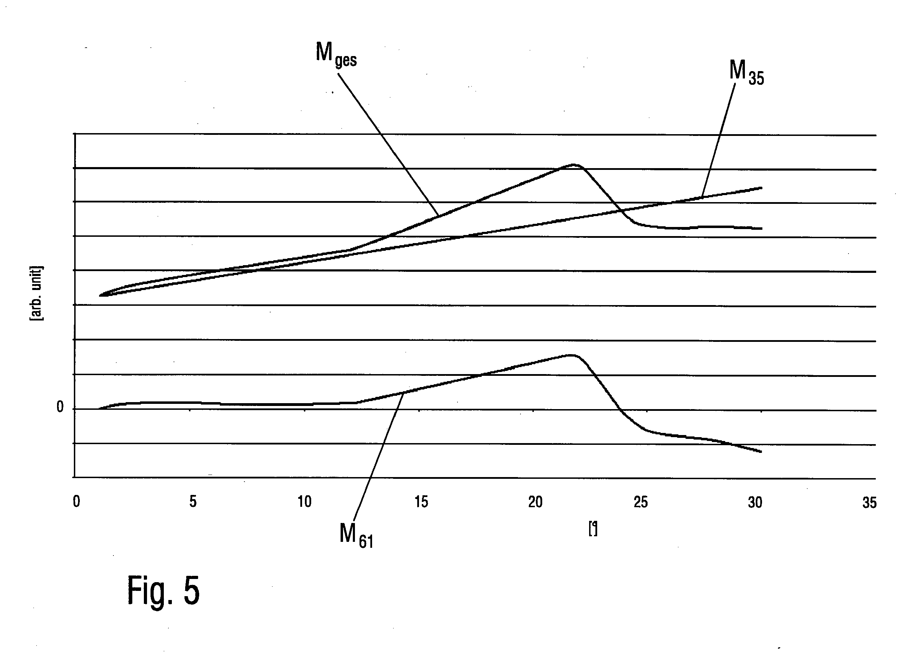

Im ersten Ausführungsbeispiel hat der Benutzer beim Entriegelungsvorgang des Beschlagsystems in beiden Beschlägen 10 die Kraft der jeweiligen Federanordnung 35 zu überwinden. Um subjektiv das Gefühl eines Schaltens zwischen "verriegelt" und "entriegelt" zu erzeugen, ist eine nichtlineare Kennlinie Mges (Entriegelungsdrehmoment-Entriegelungsdrehwinkel) der gesamten aller beim Betätigen des Handhebels 5 wirkenden Federkräfte erstrebenswert. Erfindungsgemäß ist hierzu eine Formfeder 61 vorgesehen, welche ein Moment mit einer nichtlinearen Kennlinie M₆₁ erzeugt. Dieser nichtlineare Anteil der Formfeder 61 addiert sich zu der im wesentlichen (d.h. wenigstens näherungsweise) linearen Kennlinie M₃₅ des von den beiden Federanordnungen 35 (und einer etwaigen Rückstellfeder des Anschlagmodul 50) erzeugten Momentes, so dass sich der gewünschte Verlauf der gesamten Kennlinie Mges ergibt, wie in Fig. 5 mit dem Entriegelungsmoment über dem Entriegelungswinkel dargestellt. Vorzugsweise steigt die Kennlinie M₆₁ des von der Formfeder 61 erzeugten Moments zunächst leicht an oder verläuft auf niedrigem Niveau, d.h. die Formfeder 61 wirkt dem Entriegelungsvorgang zunächst entgegen. Dann fällt die Kennlinie M₆₁ der Formfeder 61, d.h. die Formfeder 61 erleichtert-subjektiv - den weiteren Entriegelungsvorgang. Gegebenenfalls unterschreitet die Kennlinie M₆₁ des von der Formfeder 61 erzeugten Moments schließlich die Nulllinie, d.h. sie unterstützt dann den Entriegelungsvorgang. Durch die genaue Ausbildung der Formfeder 61 lassen sich in der Summe mit der linearen Kennlinie M₃₅ der Federanordnungen 35 verschiedenste Kennlinien Mges konstruieren, um die gewünschte Abhängigkeit des vom Benutzer aufzubringenden Drehmomentes in Abhängigkeit vom Drehwinkel zu erzeugen.

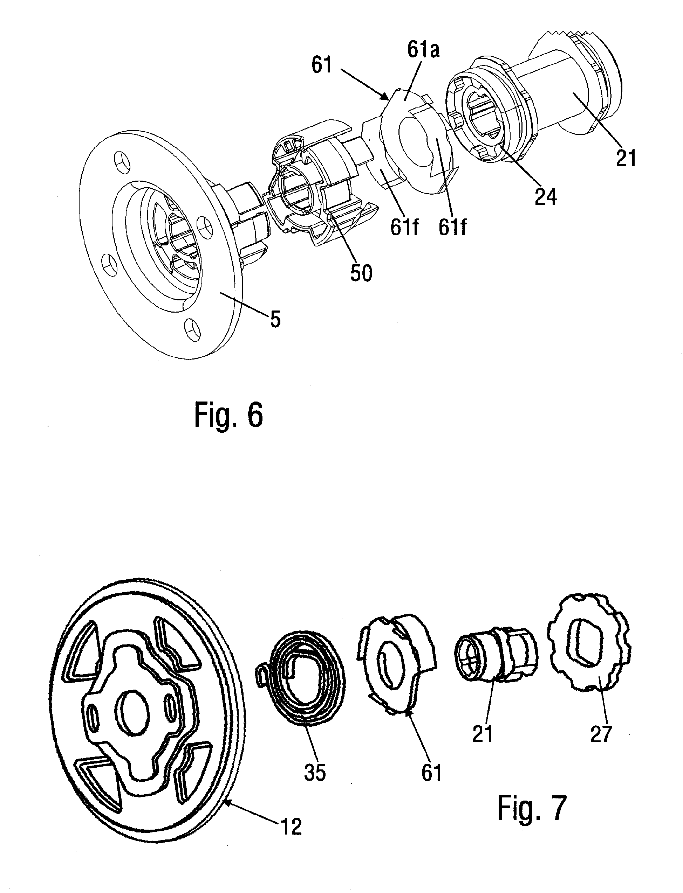

Die Formfeder 61 wirkt zwischen zwei Bauteilen des Beschlagsystems, welche als erstes Bauteil 63 und als zweites Bauteil 64 bezeichnet seien und welche sich beim Entriegelungsvorgang des Beschlagsystems relativ zueinander bewegen, insbesondere drehen. Die Formfeder 61 wirkt letztendlich bezüglich der Federkräfte parallel zur jeweiligen Federanordnung 35. Das erste Bauteil 63 ist beispielsweise der Handhebel 5, das Anschlagmodul 50, die Übertragungsstange 7, der Mitnehmer 21 oder der Exzenter 27 oder ein damit drehfest verbundenes Bauteil. Das zweite Bauteil 64 ist beispielsweise eines der beiden Beschlagteile 11 oder 12, das Freischwenk-Steuerelement 45 oder die Stützbuchse für die Lehnenkompensationsfeder. Fig. 6 zeigt eine erste Version einer beispielhaften Anordnung der Formfeder 61 mit dem Anschlagmodul 50 als erstem Bauteil 63 und der am zweiten Beschlagteil 12 befestigten und die Lehnenkompensationsfeder abstützenden Stützbuchse 48 als zweitem Bauteil. Diese bezüglich des Beschlags 10 externe Anordnung der Formfeder 61 lässt sich leicht an Kundenwünsche anpassen. Fig. 7 zeigt eine zweite Version einer beispielhaften Anordnung der Formfeder 61 mit dem zweiten Beschlagteil 12 als erstem Bauteil 63 und dem Exzenter 27 als zweitem Bauteil 64. Diese bezüglich des Beschlags 10 interne Anordnung der Formfeder 61 ist bauraumsparend. Die interne Anordnung kann zu einer drehfesten Verbindung der Formfeder 61 zum Freischwenk-Steuerelement 45 als zweitem Bauteil 64 abgewandelt werden, so dass für den Bereich der Neigungseinstellung und des Freischwenkens unterschiedliche Kennlinien einstellbar sind.

Die Formfeder 61 ist vorzugsweise einstückig aus Federstahl hergestellt. Die Formfeder 61 weist einen Grundkörper 61a auf, welcher beispielsweise ringförmig ausgebildet und konzentrisch zur Achse A angeordnet ist. Der Grundkörper 61a ist drehfest mit dem ersten Bauteil 63 verbunden, beispielsweise mittels einer passenden Innen- oder Außenkontur. Die Formfeder 61 weist ferner wenigstens einen Federarm 61f auf, welcher vom Grundkörper 61a absteht. Vorliegend weist der Federarm 61f einen axial vom Grundkörper 61a abstehenden Abschnitt auf, welcher sich in einen in Umfangsrichtung der Achse A verlaufenden Abschnitt des Federarms 61f fortsetzt, der dann mit einem freien Ende des Federarms 61 endet. Vorzugsweise sind zwei (oder mehr) Federarme 61f vorgesehen, welche untereinander gleich ausgebildet und in Umfangsrichtung zur Achse A gleichmäßig am Grundkörper 61 a angeordnet sind, so dass die Lagerkräfte sich gegenseitig aufheben und keine zusätzlichen Reibkräfte in der Lagerung entstehen. Die vorgesehenen Federarme 61f liegen (federnd) am zweiten Bauteil 64 an.

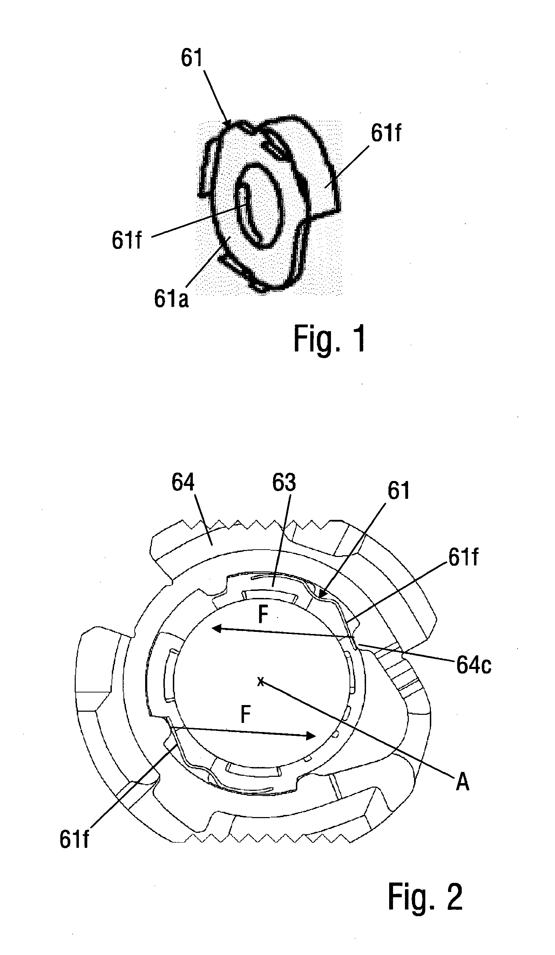

Fig. 2 zeigt beispielhaft einen Schnitt durch das zweite Bauteil 64, das erste Bauteil 63 und die Formfeder 61 in der verriegelten Ausgangsstellung, d.h. wenn das Beschlagsystem verriegelt ist. Die Formfeder 61 ist drehfest mit dem ersten Bauteil 63 verbunden und wird in radialer Richtung vom zweiten Bauteil 64 (wenigstens abschnittsweise) umschlossen. Die Federarme 61f der Formfeder 61 liegen jeweils in einem Kontaktpunkt an einer Kontur 64c des zweiten Bauteils 64 an. Die Konturen 64c ragen radial zur Formfeder 61 hin, also radial nach innen, wodurch die Federarme 61f ausgelenkt werden, also die Formfeder 61 vorgespannt ist. Die an den jeweiligen Kontaktpunkten der Federarme 61f mit den Konturen 64c entstehenden Kräfte F sind in der Zeichnung angedeutet. Ihre Richtung und ihr Betrag hängen von der Federsteifigkeit und der Tangente im Kontaktpunkt ab. In der Ausgangsstellung erzeugen die durch den Kontakt entstehenden Kräfte F ein schließendes Moment um die Achse A, welches in der Zeichnung linksdrehend wirkt.

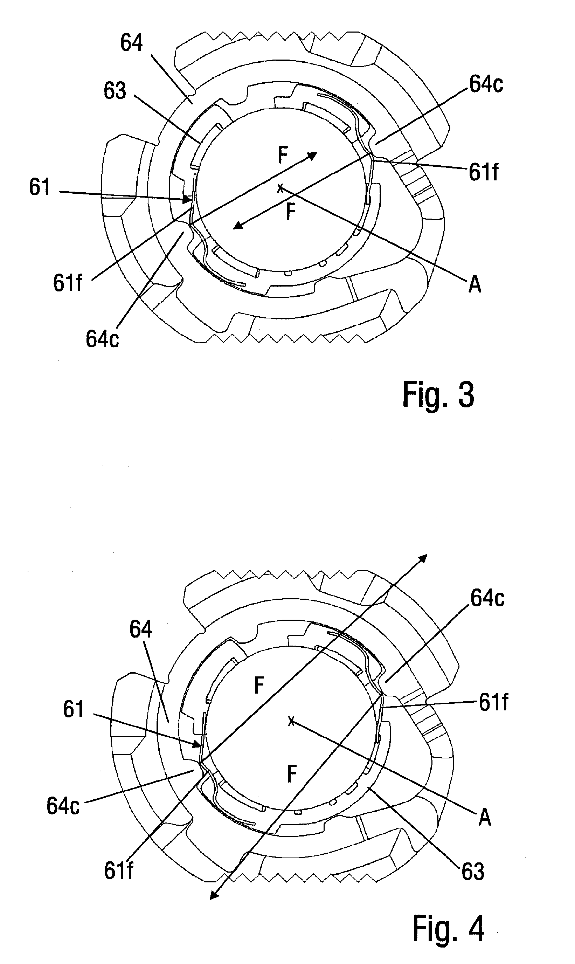

Fig. 3 zeigt eine Zwischenstellung, nachdem das erste Bauteil 63 für den Entriegelungsvorgang im Uhrzeigersinn gedreht ist. Die Federarme 61f weisen ungefähr mittig einen S-förmig verlaufenden Abschnitt auf. Sobald dieser Abschnitt in Kontakt mit den jeweiligen Kontur 64c kommt, ändern sich die Auslenkung des jeweiligen Federarms 61f, die Lage des Kontaktpunktes und die Richtung der Tangente, beispielsweise so, dass sich aus den Kräften F ein geringes Moment um die Achse A ergibt, welches öffnend wirkt, also in der Zeichnung rechtsdrehend ist. Fig. 4 zeigt die entriegelte Endstellung mit einer weiteren Verlagerung des Kontaktpunktes und der Richtung der Tangente aufgrund des S-förmig verlaufenden Abschnittes der Federarme 61f, so dass die Kräfte F zu einem großen öffnenden Drehmoment führen.

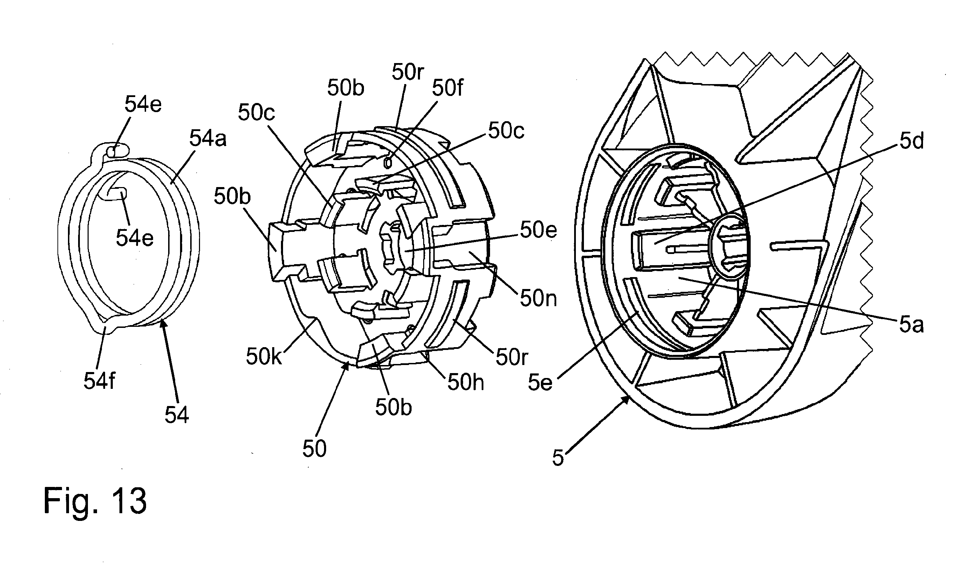

Im zweiten Ausführungsbeispiel ist das Anschlagmodul 50 (Fig. 13) topfförmig ausgebildet, vorzugsweise als Kunststoff-Spritzguss-Teil. Das Anschlagmodul 50 ist mit seiner offenen Seite dem zweiten Beschlagteil 12 zugewandt und fluchtet mit der Achse A. An der offenen Seite des Anschlagmoduls 50 ist der Rand der zylindrischen Wand des Anschlagmoduls 50 wie eine Krone ausgebildet, indem entlang des Randes mehrere, vorliegend vier, angeformte (d. h. einstückig mit dem Anschlagmodul 50 ausgebildete) Anschläge 50b axial abstehen, welche mit den besagten Gegenanschlägen 51 am Beschlag 10, vorzugsweise einem Sternabsatz am zweiten Beschlagteil 12 (Fig. 10, Fig. 19), oder an der Stützbuchse 48 (Fig. 20 bis 24) zusammenwirkt. Die vier Anschläge 50b sind dabei mit viel Spiel in Umfangsrichtung, beispielsweise 30°, zwischen den Gegenanschlägen 51 angeordnet. Aus dem Inneren des Anschlagmoduls 50 ragen mehrere, vorliegend sechs, Clipshaken 50c axial hervor, welche konzentrisch zu den Anschlägen 50b angeordnet sind. Die Clipshaken 50c hintergreifen den Befestigungsring 24 in axialer Richtung unter Bildung einer Clipsverbindung, wodurch das Anschlagmodul 50 mit dem Beschlag 10 (auf dessen Außenseite) drehbar verbunden ist.

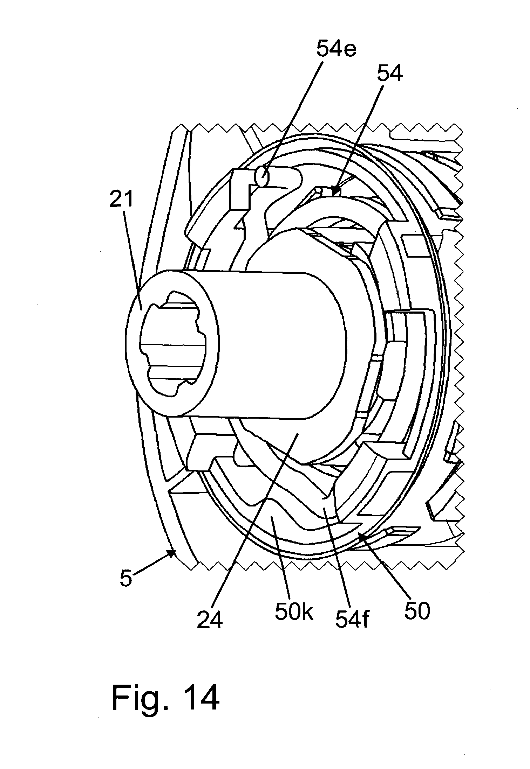

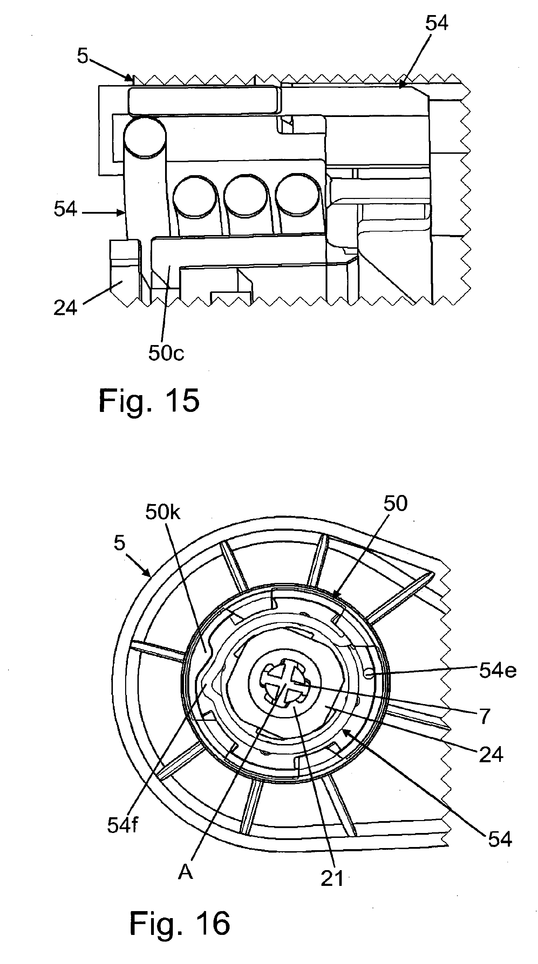

Die Rückstellfeder 54 (Fig. 13) ist vorzugsweise aus Federdraht ausgebildet. Sie weist einen schraubenförmig gewundenen Grundkörper 54a und zwei Federenden 54e auf. Die beiden Federenden 54e sind umgebogen und stehen (entgegengesetzt) axial vom Grundkörper 54a ab. Die Rückstellfeder 54 wird vom Anschlagmodul 50 aufgenommen, wobei sie radial zwischen der Wand des topfförmigen Anschlagmoduls 50 und den Clipshaken 50c angeordnet ist (Fig. 14, Fig. 15). Die beiden Federenden 54e sind so geformt, dass die Rückstellfeder 54 leicht im Anschlagmodul 50 in einer Parkposition vormontiert werden kann. Hierfür wird die Rückstellfeder 54 spannungsfrei in das Anschlagmodul 50 eingesetzt. Die Rückstellfeder 54 wird (in Umfangsrichtung und axial) gespannt, und zwar etwas weiter als die Parkposition, und dann losgelassen. Dabei entspannt die Rückstellfeder 54 sich so weit, bis sie in der Parkposition zum liegen kommt, wodurch sie für die weitere Montage gesichert ist.

Das zweite Beschlagteil 12 weist einen Halter auf, welcher als ein in den Bauraum im Inneren des Beschlags 10 ragenden Zapfen ausgebildet ist, der auf seiner Kehrseite ein nach außen offenes Sackloch aufweist. Das Sackloch kann herstellungsbedingt bei der Ausbildung des Zapfens entstehen. Im Inneren des Beschlags 10 dient der Halter zur Befestigung der Federanordnung 35. Auf der Außenseite des zweiten Beschlagsteils 12 dient der Halter 12h der Einhängung (also Befestigung) des einen der beiden Federenden 54e der Rückstellfeder 54.

Im Boden des Anschlagmoduls 50, also seiner (weitgehend) geschlossenen Stirnseite, ist eine Öffnung 50e vorgesehen. die in axialer Richtung durchgängig ausgebildet und die konzentrisch zur zylindrischen Wand mit den Anschlägen 50b und zu den Clipshaken 50c angeordnet ist. Die profilierte Öffnung 50e nimmt die Übertragungsstange 7 drehfest auf. Konzentrisch zur Öffnung 50e sind mehrere, vorliegend acht, in Umfangsrichtung gleichmäßig verteilte Federeinhängungen 50f angeordnet, die axial durchgängig im Boden des Anschlagmoduls 50 ausgebildet sind. In einer dieser Federeinhängungen 50f ist das andere der beiden Federenden der Rückstellfeder 54 gesteckt (und damit befestigt).

In der zylindrischen Wand des Anschlagmoduls 50 sind radial außen mehrere, vorliegend vier, Nuten 50n ausgebildet, welche in axialer Richtung verlaufen und an einem Ende am Boden des Anschlagmoduls 50 münden. Vorliegend fluchten die Nuten 50n mit den Anschlägen 50b. In Umfangsrichtung zwischen den Nuten 50n sind an der zylindrischen Wand des Anschlagmoduls 50 mehrere, vorliegend vier, Rastnasen 50r ausgebildet.

Der Handhebel 5 (Fig. 13) besteht vorzugsweise aus Kunststoff und ist im zweiten Ausführungsbeispiel als einstückiges Bauteil ausgebildet. Der Handhebel 5 weist (als Teilbereich) eine Aufnahme 5a auf, in welche das Anschlagmodul 50 beim Aufstecken des Handhebels 5 (in axialer Richtung) eingeführt wird. Die Aufnahme 5a nimmt dann den größten Teil des Anschlagmoduls 50 auf. Die Aufnahme 5a wird begrenzt von einer Wand, an welcher mehrere, vorliegend vier lange, Rippen 5d ausgebildet sind, die in axialer Richtung verlaufen. Die Rippen 5d werden beim Aufstecken des Handhebels 5 auf das Anschlagmodul 50 (formschlüssig) in die Nuten 50n eingeführt. Der Handhebel 5 und das Anschlagmodul 50 sind dadurch in Umfangsrichtung drehfest miteinander verbunden, so dass eine Übertragung von Drehmomenten möglich ist. Optional sind (weitere) axiale Vorsprünge am Handhebel 5 und Vertiefungen am Anschlagmodul50 ausgebildet, welche zusätzlich einen Formschluss zwischen dem Handhebel 5 und dem Anschlagmodul 50 schaffen.

In der Wand der Aufnahme 5a sind ferner mehrere, vorliegend vier, Rastvertiefungen 5e ausgebildet, die sich in Umfangsrichtung voneinander beabstandet und hintereinander erstrecken. Beim Aufstecken des Handhebels 5 auf das Anschlagmodul 50 gelangen die Rastnasen 50r in die Rastvertiefungen 5e unter Bildung einer Clipsverbindung, d. h. der in der Richtung des Aufsteckens voreilende Rand jeder Rastvertiefung 5e hintergreift die zugeordnete Rastnase 50r. Der Handhebel 5 ist dadurch in axialer Richtung am Anschlagmodul 50 gesichert. Die Elastizität des Anschlagmoduls 50 und des Handhebels 5 reichen aus, damit die Rastnasen 50r den Weg zwischen dem stirnseitigen Rand der Wand der Aufnahme 5a und der Rastvertiefung 5e zurücklegen können.

Die Übertragungsstange 7 weist vorzugsweise Klemmnocken 7d auf, die radial geringfügig abstehen und beispielsweise durch eine lokale Verformung (Quetschen) der Übertragungsstange 7 ausgebildet werden. Die Klemmnocken 7d wirken mit dem Rand der Öffnung 50e des Anschlagmoduls 50 zusammen, indem sie die Übertragungsstange 7 - zusätzlich zur drehfesten Verbindung in Umfangsrichtung - in axialer Richtung am Anschlagmodul 50 festklemmen, d. h. reibschlüssig (und geringfügig formschlüssig) axial sichern. Die Übertragungsstange 7 ist dann gegen ein Verschieben in den Beschlag 10, d. h. in den Mitnehmer 21, hinein gesichert. Das Verschieben der Übertragungsstange 7 aus dem Beschlag 10 heraus verhindert auch der Handhebel 5, an den die Übertragungsstange 7 in axialer Richtung in Anlage gelangt.

Der Benutzer hat beim Entriegelungsvorgang des Beschlagsystems in beiden Beschlägen 10 die Kraft der jeweiligen Federanordnung 35 und der Rückstellfeder 54 zu überwinden. Um subjektiv das Gefühl eines Schaltens zwischen "verriegelt" und "entriegelt" zu erzeugen, ist eine nichtlineare Kennlinie M_{ges} (Entriegelungsdrehmoment-Entriegelungsdrehwinkel) der gesamten aller beim Betätigen des Handhebels 5 wirkenden Federkräfte erstrebenswert.

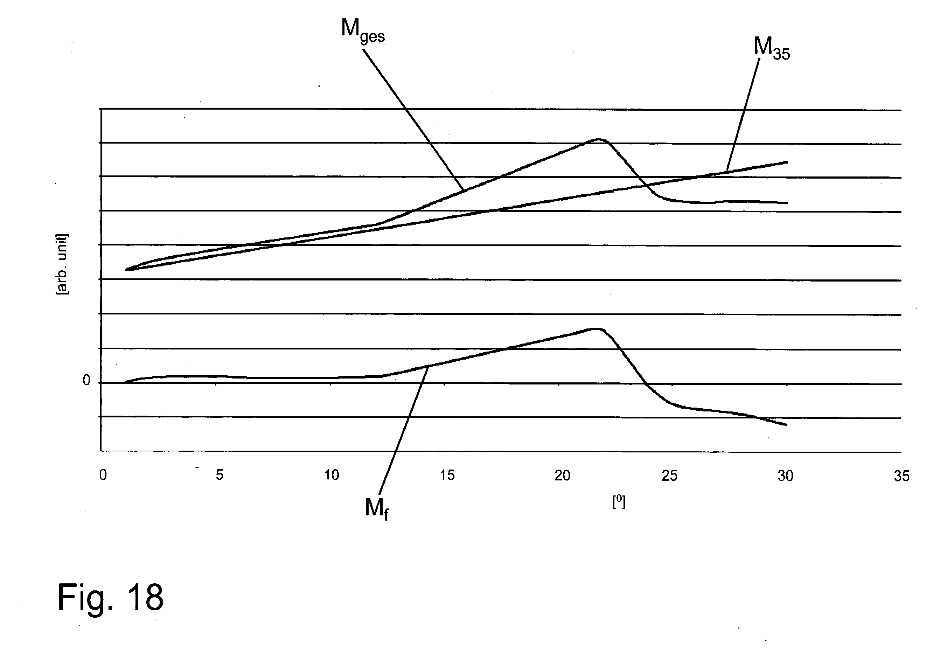

Im zweiten Ausführungsbeispiel weist die Rückstellfeder 54 wenigstens einen Formabschnitt 54f, vorliegend genau einen Formabschnitt 54f, auf. Mit diesem Formabschnitt 54f wirkt die Rückstellfeder 54 während des Entriegelungsvorgangs in spezieller Weise mit dem Anschlagmodul 50 zusammen und erzeugt so zeitweise ein Moment mit einer nichtlinearen Kennlinie M_{f}. Dieser nichtlineare Anteil addiert sich zu der im wesentlichen (d. h. wenigstens näherungsweise) linearen Kennlinie M₃₅ der Federanordnungen 35 der beiden Beschläge 10 (und gegebenenfalls dem linearen Anteil der Rückstellfeder 54) erzeugten Momentes, so dass sich der gewünschte Verlauf der gesamten Kennlinie M_{ges} ergibt, wie in Fig. 18 mit dem Entriegelungsmoment über dem Entriegelungswinkel dargestellt. Vorzugsweise steigt die Kennlinie M_{f} des von der Rückstellfeder 54 mittels ihres Formabschnitts 54f erzeugten Moments zunächst leicht an oder verläuft auf niedrigem Niveau, d. h. die Rückstellfeder 54 wirkt mit ihrem Formabschnitt 54f dem Entriegelungsvorgang zunächst entgegen. Dann fällt die Kennlinie M_{f}des vom Formabschnitt 54f erzeugten Moments, d. h. die Rückstellfeder 54 erleichtert - subjektiv - den weiteren Entriegelungsvorgang. Gegebenenfalls unterschreitet die Kennlinie M_{f} des vom Formabschnitt 54f erzeugten Moments schließlich die Nulllinie, d. h. sie unterstützt dann den Entriegelungsvorgang. Durch die genaue Ausbildung des Formabschnitts 54f lassen sich in der Summe mit der linearen Kennlinie M₃₅ verschiedenste Kennlinien M_{ges} konstruieren, um die gewünschte Abhängigkeit des vom Benutzer aufzubringenden Drehmomentes in Abhängigkeit vom Drehwinkel zu erzeugen.

Der Formabschnitt 54f ist an dem dem Beschlag 10 zugewandten Ende der Rückstellfeder 54 ausgebildet, und zwar in der letzten Windung des Grundkörpers 54a. Der Federdraht, aus welchem die Rückstellfeder 54 besteht, läuft im Grundkörper 54a in Umfangsrichtung (und um einen Federdrahtdurchmesser pro Windung in axialer Richtung). Der Formabschnitt 54f ist eine radiale Ausbuchtung des Federdrahtes in Nasenform, an welcher der Federdraht in einem ersten Teil (schräg) radial nach außen abbiegt, umkehrt und in einem zweiten Teil wieder (schräg) radial nach innen läuft. Der näher zum Federende 54e hin gelegene Teil der nasenförmigen Ausbuchtung weist in Umfangsrichtung eine etwas längere Abmessung und einen geringeren Winkel zu einem tangetialen Verlauf auf ("Nasenrücken") als der daran anschließende Teil. Die Ausbuchtung kann auch radial nach innen vorgesehen sein. Im Falle mehrerer Formabschnitte 54f sind diese in Umfangsrichtung gleichmäßig angeordnet. Im zweiten Ausführungsbeispiel mit genau einem Formabschnitt 54f ist der Formabschnitt 54f - in der letzten Windung des Grundkörpers 54a - bezüglich der Achse A radial gegenüberliegend zum Federende 54e ausgebildet. Zum Zusammenwirken mit dem Formabschnitt 54f weist das Anschlagmodul50 für den Formabschnitt 54f eine zugeordnete Kontur 50k auf, welche vorzugsweise ein Vorsprung ist, der ein nasenförmiges Profil aufweist und sich rippenförmig in axialer Richtung erstreckt. Im zweiten Ausführungsbeispiel mit dem radial nach außen ausgebuchteten Formabschnitt 54f ist die Kontur 50k radial innen an der zylindrischen Wand des Anschlagmoduls 50 ausgebildet. In Umfangsrichtung betrachtet verläuft die Kontur 50k in einem ersten Teil (schräg) radial nach innen, kehrt dann um und verläuft in einem zweiten Teil wieder (schräg) radial nach außen. Der dem Formabschnitt 54f zugewandte Teil weist in Umfangsrichtung eine längere Abmessung auf ("Nasenrücken") als der davon abgewandte Teil.

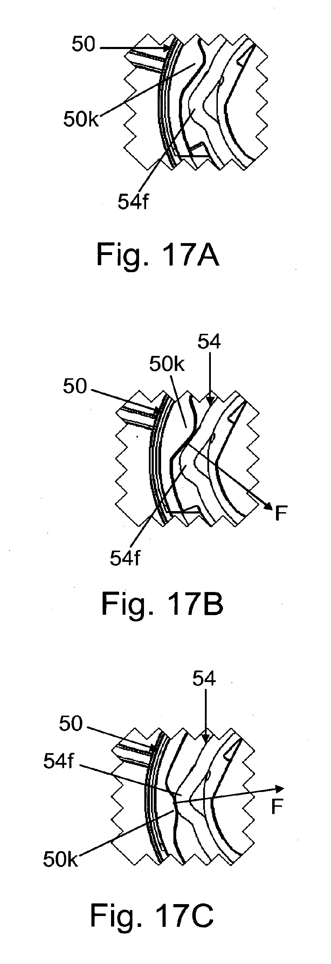

Zunächst ist der Formabschnitt 54f frei und von der Kontur 50k in Umfangsrichtung beabstandet (Fig. 16, Fig. 17A), so dass er nur als Bestandteil des Grundkörpers 54a eine geringe Wirkung entfaltet. Wenn begonnen wird, den Handhebel 5 und damit das Anschlagmodul 50 um einen Entriegelungswinkel aus der Ausgangsstellung auszulenken, dreht sich die Kontur 50k relativ zum Formabschnitt 54f der Rückstellfeder 54 und nähert sich dabei diesem an. Sobald nach einem gewissen Entriegelungswinkel die Kontur 50k mit dem ihr zugeordneten Formabschnitt 54f in Kontakt kommt (und zwar jeweils an den" Nasenrücken"), wird der Formabschnitt 54f (radial) ausgelenkt, wodurch eine Kraft F im jeweiligen Kontaktpunkt erzeugt wird (Fig. 17B). Für die Rückstellfeder 54 ändern sich aufgrund des ausgelenkten Formabschnitts 54f die Kraftverhältnisse. Abhängig von der Auslenkung des Formabschnitts 54f, der Lage des Kontaktpunktes und der Richtung der Tangente ergibt die Kraft F ein zunächst geringes, schließendes Moment um die Achse A, d. h. die Kennlinie M_{f} steigt an. Aufgrund des Verlaufs der Kontur 50k und des Formabschnitts 54f ändert die Kraft F ihre Richtung relativ zur Achse A und damit das Moment seine Drehrichtung, d. h. die Kennlinie M_{f} fällt ab. Das Moment M_{f} wächst betragsmäßig an, so dass die Kraft F am Kontaktpunkt zu einem großen öffnenden Drehmoment führt (Fig. 17C).

Es sind verschiedene Abwandlungen hinsichtlich des Formabschnitts 54f möglich. So könnten der Formabschnitt 54f radial nach innen ausgebuchtet sein und mit einer entsprechend radial nach außen vorspringenden Kontur 50k des Anschlagmoduls 50 zusammenwirken.

Ferner kann der wenigstens eine Formabschnitt 54f an einer separaten Feder, einer Formfeder, ausgebildet sein. Zwar würde damit ein zusätzliches Bauteil vorliegen, dafür aber könnte diese Formfeder mit dem wenigstens einen Formabschnitt 54f zwischen zwei Bauteilen des Beschlagsystems wirksam sein, welche sich beim Entriegelungsvorgang des Beschlagsystems relativ zueinander bewegen, insbesondere drehen. Die besagte Formfeder wirkt letztendlich bezüglich der Federkräfte parallel zur jeweiligen Federanordnung 35. Das erste Bauteil ist beispielsweise der Handhebel 5, das Anschlagmodul 50, die Übertragungsstange 7, der Mitnehmer 21 oder der Exzenter 27 oder ein damit drehfest verbundenes Bauteil. Das zweite Bauteil ist beispielsweise eines der beiden Beschlagteile 11 oder 12, das Freischwenk-Steuerelement 45 oder die Stützbuchse 48 für die Lehnenkompensationsfeder 47. Eine bezüglich des Beschlags 10 externe Anordnung der Formfeder lässt sich leicht an Kundenwünsche anpassen. Eine bezüglich des Beschlags 10 interne Anordnung der Formfeder ist bauraumsparend. Die interne Anordnung kann zu einer drehfesten Verbindung der Formfeder zum Freischwenk-Steuerelement 45 als zweitem Bauteil abgewandelt werden, so dass für den Bereich der Neigungseinstellung und des Freischwenkens unterschiedliche Kennlinien einstellbar sind.

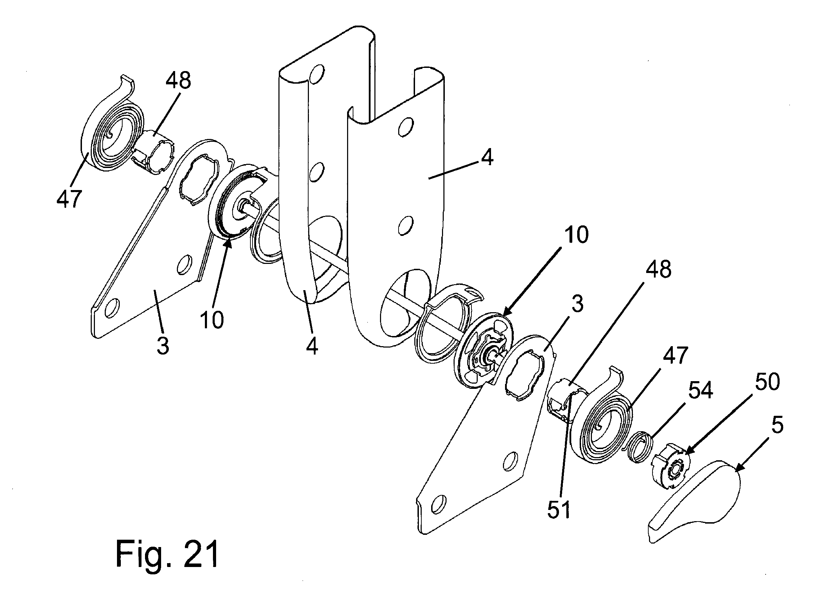

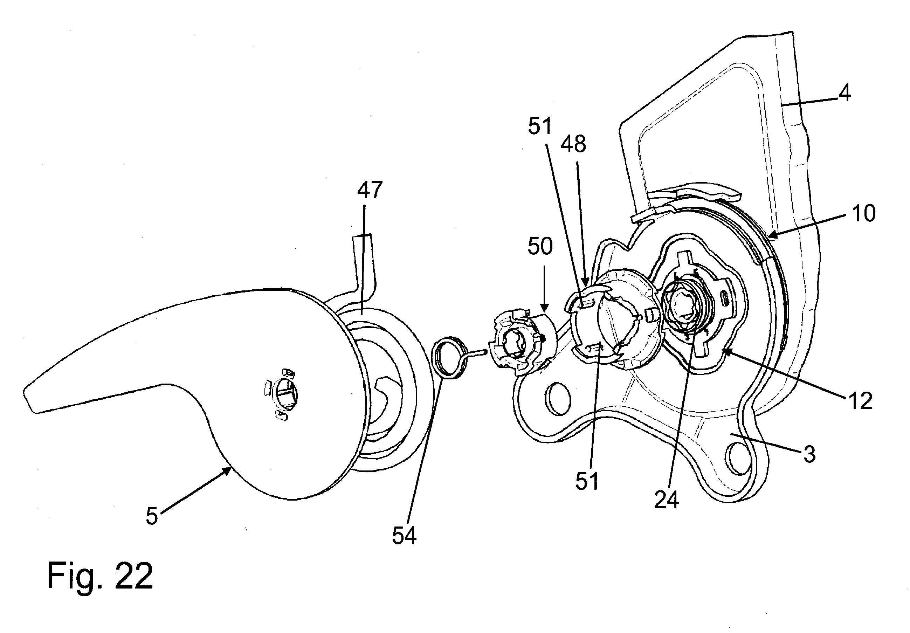

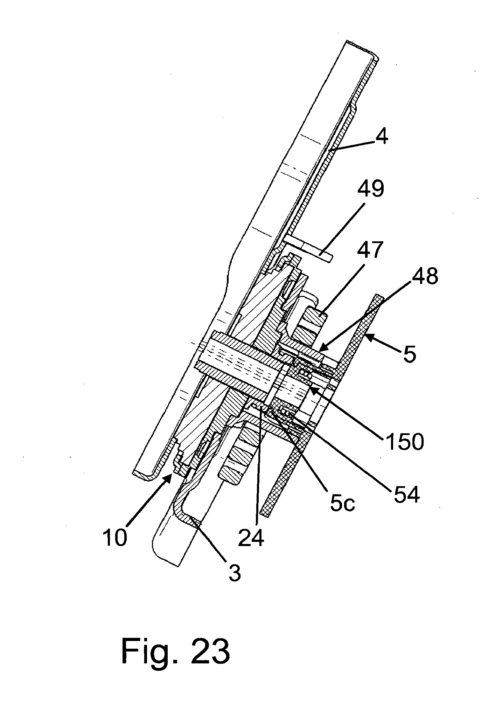

Es sind auch verschiedene Abwandlungen hinsichtlich des Anschlagmoduls 50 oder der Stützbuchse 48 möglich. So kann die Stützbuchse 48 auf der dem Handhebel 5 zugewandten Seite des Beschlags 10, also vorliegend am zweiten Beschlagteil 12, angebracht sein (Fig. 20, Fig. 21). Der Gegenanschlag 51 für das Anschlagmodul 50 ist dann an der Stützbuchse 48 ausgebildet, beispielsweise als zinnenartig ausgebildete axiale Vorsprünge der Stützbuchse 48. Die am Befestigungsring 24 eingeclipsten Clipshaken 50c des Anschlagmoduls 50 sind etwa um die axiale Abmessung der Stützbuchse 48 verlängert. Alternativ ist das Anschlagmodul 50 innerhalb der Stützbuchse 48 gelagert und wirkt mit beispielsweise rippenartigen Vorsprüngen an der Innenwand der Stützbuchse 48 als Gegenanschlag 51 zusammen (Fig. 22, Fig. 23). Beide Abwandlungen sind sowohl mit wenigstens einem Formabschnitt 54f an der Rückstellfeder 54 als auch mit wenigstens einem Formabschnitt 54f an einer separaten Formfeder möglich.

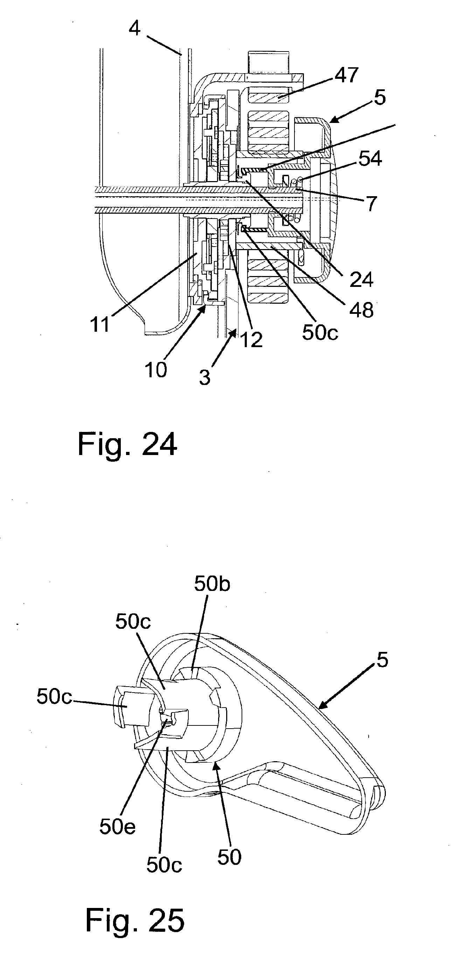

Schließlich kann das Anschlagmodul 50 einstückig mit dem Handhebel 5 ausgebildet sein - unter Entfall der dazwischen wirksamen Elemente -, und zwar sowohl ohne Stützbuchse 48, also beim direkten Zusammenwirken mit einem Gegenanschlag 51 am Beschlag 10, als auch mit Stützbuchse 48, also beim Zusammenwirken mit einem Gegenanschlag 51 an der Stützbuchse 48 (Fig. 24, Fig. 25), Beide Abwandlungen sind sowohl mit wenigstens einem Formabschnitt 54f an der Rückstellfeder 54 als auch mit wenigstens einem Formabschnitt 54f an einer separaten Formfeder möglich.

### Bezugszeichenliste

- 1: Fahrzeugsitz
- 3: Sitzteil
- 4: Lehne
- 5: Handhebel
- 5a: Aufnahme
- 5d: Rippe
- 5e: Rastvertiefung
- 7: Übertragungsstange
- 7d: Klemmnocken
- 10: Beschlag
- 11: erstes Beschlagteil
- 12: zweites Beschlagteil
- 13: Umklammerungsring
- 14: Führungssegment
- 16: Riegel
- 17: Zahnkranz
- 21: Mitnehmer
- 23: Bohrung
- 24: Befestigungsring
- 27: Exzenter
- 35: Federanordnung
- 36: Steuerscheibe
- 38: Nase
- 45: Freischwenk-Steuerelement
- 47: Lehnenkompensationsfeder
- 48: Stützbuchse
- 50: Anschlagmodul
- 50b: Anschlag
- 50c: Clipshaken
- 50e: Öffnung
- 50f: Federeinhängung
- 50k: Kontur
- 50n: Nut
- 50r: Rastnase
- 51: Gegenanschlag
- 54: Rückstellfeder
- 54a: Grundkörper
- 54e: Federende
- 54f: Formabschnitt
- 61: Formfeder
- 61a: Grundkörper
- 61f: Federarm
- 63: erstes Bauteil
- 64: zweites Bauteil
- 64c: Kontur
- A: Achse
- F: Kraft im Kontaktpunkt
- Mges: gesamte Kennlinie des Momentes
- M₃₅: Kennlinie des Momentes der Federanordnungen
- M₆₁: Kennlinie des Momentes der Formfeder
- M_{f}: Kennlinie des Momentes des Formabschnitts

## Patentansprüche

1. Beschlagsystem für einen Fahrzeugsitz, insbesondere einen Kraftfahrzeugsitz, mit wenigstens einem Beschlag (10), welcher ein erstes Beschlagteil (11) und ein zweites Beschlagteil (12) aufweist, die miteinander verriegelbar und relativ zueinander um eine Achse (A) verdrehbar sind, einer Übertragungstange (7), deren Drehung während eines Entriegelungsvorgangs den Beschlag (10) entgegen dem einer Kennlinie (M₃₅) folgenden, von einer Federanordnung (35) erzeugten Moment entriegelt, und einem Handhebel (5) zum Einleiten des Entriegelungsvorgangs, dessen Betätigung die Übertragungsstange (7) dreht, **dadurch gekennzeichnet, dass** zwischen einem ersten Bauteil (63) und einem zweiten Bauteil (64), welche sich beim Entriegelungsvorgang relativ zueinander bewegen, insbesondere drehen, eine Formfeder (61) wirksam ist, deren von ihr erzeugtes Moment einer nichtlinearen Kennlinie (M₆₁) folgt, die zusammen mit der wenigstens näherungsweise linearen Kennlinie (M₃₅) der Federanordnung (35) eine gesamte Kennlinie (Mges) ergibt, wobei aufgrund der nichtlinearen Kennlinie (M₆₁) die Formfeder (61) beim Entriegelungsvorgang zunächst ein schließendes Moment und dann ein öffnendes Moment erzeugt oder dass zwischen dem Beschlag (10) und dem Handhebel (5), welche sich beim Entriegelungsvorgang relativ zueinander bewegen, insbesondere drehen, eine Rückstellfeder (54) mit wenigstens einem Formabschnitt (54f) wirksam ist, dessen von ihm erzeugtes Moment einer nichtlinearen Kennlinie (M_{f}) folgt, die zusammen mit der wenigstens näherungsweise linearen Kennlinie (M₃₅) der Federanordnung (35) eine gesamte Kennlinie (M_{ges}) ergibt, wobei aufgrund der nichtlinearen Kennlinie (M_{f}) der Formabschnitt (54f) der Rückstellfeder (54) beim Entriegelungsvorgang zunächst ein schließendes Moment und dann ein öffnendes Moment erzeugt.

2. Beschlagsystem nach Anspruch 1, **dadurch gekennzeichnet, dass** die Formfeder (61) einen Grundkörper (61a), der am ersten Bauteil (63) abgestützt ist, insbesondere drehfest mit diesem verbunden ist, und wenigstens einen Federarm (61f), der am zweiten Bauteil (64) anliegt, aufweist.

3. Beschlagsystem nach Anspruch 2, **dadurch gekennzeichnet, dass** der wenigstens eine Federarm (61f) in einem Kontaktpunkt an wenigstens einer Kontur (64c) des zweiten Bauteils (64) anliegt, welche radial zur Formfeder (61) hin ragt und den wenigstens einen Federarm (61f) auslenkt.

4. Beschlagsystem nach Anspruch 3, **dadurch gekennzeichnet, dass** sich während des Entriegelungsvorgangs der wenigstens eine Federarm (61f) und die wenigstens eine Kontur (64c) relativ zueinander bewegen und sich dadurch die Auslenkung des Federarms (61f) und die Wirkrichtung der Kräfte (F) ändern.

5. Beschlagsystem nach einem der Ansprüche 2 bis 4, **dadurch gekennzeichnet, dass** mehrere Federarme (61f) vorgesehen sind, welche untereinander gleich ausgebildet und in Umfangsrichtung zur Achse (A) gleichmäßig am Grundkörper (61a) angeordnet sind.

6. Beschlagsystem nach einem der vorhergehenden Ansprüche, **dadurch gekennzeichnet, dass** am ersten Beschlagteil (11) ein Zahnkranz (17) ausgebildet ist, dass das zweite Beschlagteil (12) radial verschiebliche Riegel (16) führt, welche mit dem Zahnkranz (17) zusammenwirken, um den Beschlag (10) zu verriegeln, dass die Federanordnung (35) einen drehbar gelagerten und mittels eines Mitnehmers (21) drehbaren Exzenter (27) beaufschlagt, welcher seinerseits die Riegel (16) beaufschlagt, und dass die Übertragungsstange (7) bei ihrer Drehung den Mitnehmer (21) dreht, welcher dadurch den Exzenter (27) dreht.

7. Beschlagsystem nach Anspruch 6, **dadurch gekennzeichnet, dass** ein Anschlagmodul (50) zwischen dem Handhebel (5) und der Übertragungsstange (7) vorgesehen ist, welches in wenigstens eine Drehrichtung den Handhebel (5) und eines der Beschlagteile (11, 12) relativ zueinander in Anschlag bringt, wobei die Formfeder (61) zwischen dem Anschlagmodul (50) als erstem Bauteil (63) und das als Anschlag wirkende der Beschlagteile (11, 12) oder eine daran befestigte Stützbuchse (48) als zweitem Bauteil (64) vorgesehen ist.

8. Beschlagsystem nach Anspruch 6, **dadurch gekennzeichnet, dass** die Formfeder (61) zwischen einem der beiden Beschlagteile (11, 12) als erstem Bauteil (63) und dem Exzenter (27) als zweitem Bauteil (64) vorgesehen ist.

9. Beschlagsystem nach Anspruch 1, **dadurch gekennzeichnet, dass** die Rückstellfeder (54) aus einem Federdraht ausgebildet ist mit einem schraubenförmig gewundenen Grundkörper (54a) und zwei Federenden (54e).

10. Beschlagsystem nach Anspruch 1 oder 9, **dadurch gekennzeichnet, dass** der Formabschnitt (54f) als nasenförmige Ausbuchtung an einem Grundkörper (54a) der Rückstellfeder (54) ausgebildet ist.

11. Beschlagsystem nach Anspruch 9 und 10, **dadurch gekennzeichnet, dass** der Formabschnitt (54f) als radiale Ausbuchtung in einer letzten Windung des Grundkörpers (54a) ausgebildet ist, insbesondere dem Federende (54e) bezüglich der Achse (A) radial gegenüberliegend.

12. Beschlagsystem nach Anspruch 1 oder 9 bis 11, **dadurch gekennzeichnet, dass** der Formabschnitt (54f) beim Entriegelungsvorgang mit einer zugeordneten Kontur (50k) zusammenwirkt, welche insbesondere an einem Anschlagmodul (50) ausgebildet ist.

13. Beschlagsystem nach Anspruch 12, **dadurch gekennzeichnet, dass** sich während des Entriegelungsvorgangs der Formabschnitt (54f) und die zugeordnete Kontur (50k) relativ zueinander bewegen und sich dadurch die Auslenkung des Formabschnitts (54f) und die Wirkrichtungen der Kräfte (F) in den Kontaktpunkten ändern, wobei das Anschlagmodul (50) zwischen dem Handhebel (5) und der Übertragungsstange (7) vorgesehen ist, welches mit wenigstens einem Gegenanschlag (51) zusammenwirkt, um in wenigstens einer Drehrichtung den Handhebel (5) und eines der Beschlagteile (11, 12) relativ zueinander in Anschlag zu bringen, wobei die Rückstellfeder (54) einerseits am Anschlagmodul (50) und andererseits an dem den Gegenanschlag aufweisenden Bauteil (12, 48) abgestützt ist.

14. Beschlagsystem nach Anspruch 1 oder 9 bis 13, **dadurch gekennzeichnet, dass** am ersten Beschlagteil (11) ein Zahnkranz (17) ausgebildet ist, dass das zweite Beschlagteil (12) radial verschiebliche Riegel (16) führt, welche mit dem Zahn kranz (17) zusammenwirken, um den Beschlag (10) zu verriegeln, dass die Federanordnung (35) einen drehbar gelagerten und mittels eines Mitnehmers (21) drehbaren Exzenter (27) beaufschlagt, welcher seinerseits die Riegel (16) beaufschlagt, und dass die Übertragungsstange (7) bei ihrer Drehung den Mitnehmer (21) dreht, welcher dadurch den Exzenter (27) dreht.

15. Fahrzeugsitz (1) mit einem Sitzteil (3) und einer Lehne (4), welche mittels eines Beschlagsystems (5, 7, 10, 47, 52) nach einem der vorhergehenden Ansprüche am Sitzteil (3) angebracht, relativ zu diesem schwenkbar und mit unterschiedlichen Neigungseinstellungen verriegelbar ist.

## Claims

1. A fitting system for a vehicle seat, in particular a motor vehicle seat, comprising at least one fitting (10) which has a first fitting part (11) and a second fitting part (12) which are lockable to each other and are rotatable relative to each other about an axis (A), a transmission rod (7), the rotation of which, during an unlocking operation, unlocks the fitting (10) counter to the torque which follows a characteristic (M₃₅) and is produced by a spring arrangement (35), and a hand lever (5) for initiating the unlocking operation, the actuation of which hand lever rotates the transmission rod (7), **characterized in that** a shaped spring (61) is effective between a first component (63) and a second component (64) which, during the unlocking operation, move, in particular rotate, relative to each other, the torque produced by the shaped spring follows a non-linear characteristic (M₆₁) which, together with the at least approximately linear characteristic (M₃₅) of the spring arrangement (35), results in an overall characteristic (M_{Ges}), wherein, during the unlocking operation, because of the non-linear characteristic (M₆₁) the shaped spring (61) first of all produces a closing torque and then an opening torque, or **in that** a resetting spring (54) having at least one shaped section (54f) is effective between the fitting (10) and the hand lever (5) which, during the unlocking operation, move, in particular rotate, relative to each other, the torque produced by the shaped section follows a non-linear characteristic (M_{f}) which, together with the at least approximately linear characteristic (M₃₅) of the spring arrangement (35), results in an overall characteristic (M_{Ges}), wherein, during the unlocking operation, because of the non-linear characteristic (M_{f}) the shaped section (54f) of the resetting spring (54) first of all produces a closing torque and then an opening torque.

2. The fitting system as claimed in claim 1, **characterized in that** the shaped spring (61) has a basic body (61a) which is supported on the first component (63), in particular is connected thereto in a torsionally rigid manner, and at least one spring arm (61f) which bears against the second component (64).

3. The fitting system as claimed in claim 2, **characterized in that** the at least one spring arm (61f) bears at a contact point against at least one contour (64c) of the second component (64), said contour projecting radially toward the shaped spring (61) and deflecting the at least one spring arm (61f).

4. The fitting system as claimed in claim 3, **characterized in that**, during the unlocking operation, the at least one spring arm (61f) and the at least one contour (64c) move relative to each other and thereby change the deflection of the spring arm (61f) and the direction of action of the forces (F).

5. The fitting system as claimed in one of claims 2 to 4, **characterized in that** there is a plurality of spring arms (61f) which are of identical design to one another and are arranged on the basic body (61a) uniformly in the circumferential direction with respect to the axis (A).

6. The fitting system as claimed in one of the preceding claims, **characterized in that** a toothed ring (17) is formed on the first fitting part (11), **in that** the second fitting part (12) guides radially displaceable locking bars (16) which interact with the toothed ring (17) in order to lock the fitting (10), **in that** the spring arrangement (35) acts upon an eccentric (27) which is mounted rotatably and is rotatable by means of a driver (21) which, for its part, acts upon the locking bars (16), and **in that** the transmission rod (7), when rotated, rotates the driver (21) which thereby rotates the eccentric (27).

7. The fitting system as claimed in claim 6, **characterized in that** a stop module (50) is provided between the hand lever (5) and the transmission rod (7), said stop module bringing the hand lever (5) and one of the fitting parts (11, 12) to a stop relative to each other in at least one direction of rotation, wherein the shaped spring (61) is provided between the stop module (50) as the first component (63) and that one of the fitting parts (11, 12) which acts as a stop or a supporting bushing (48) fastened to said fitting part, as the second component (64).

8. The fitting system as claimed in claim 6, **characterized in that** the shaped spring (61) is provided between one of the two fitting parts (11, 12) as the first component (63) and the eccentric (27) as the second component (64).

9. The fitting system as claimed in claim 1, **characterized in that** the resetting spring (54) is formed from a spring wire with a helically coiled basic body (54a) and two spring ends (54e).

10. The fitting system as claimed in claim 1 or 9, **characterized in that** the shaped section (54f) is designed as a lug-shaped bulge on a basic body (54a) of the resetting spring (54).

11. The fitting system as claimed in claims 9 and 10, **characterized in that** the shaped section (54f) is designed as a radial bulge in a final coil of the basic body (54a), in particular in a manner lying radially opposite the spring end (54e) with respect to the axis (A).

12. The fitting system as claimed in claim 1 or claims 9 to 11, **characterized in that**, during the unlocking operation, the shaped section (54f) interacts with an associated contour (50k) which is formed in particular on a stop module (50).

13. The fitting system as claimed in claim 12, **characterized in that**, during the unlocking operation, the shaped section (54f) and the associated contour (50k) move relative to each other and thereby change the deflection of the shaped section (54f) and the directions of action of the forces (F) at the contact points, wherein the stop module (50) is provided between the hand lever (5) and the transmission rod (7) and interacts with at least one counter stop (51) in order to bring the hand lever (5) and one of the fitting parts (11, 12) to a stop relative to each other in at least one direction of rotation, wherein the resetting spring (54) is supported firstly on the stop module (50) and secondly on the component (12, 48) having the counter stop.

14. The fitting system as claimed in claim 1 or claims 9 to 13, **characterized in that** a toothed ring (17) is formed on the first fitting part (11), **in that** the second fitting part (12) guides radially displaceable locking bars (16) which interact with the toothed ring (17) in order to lock the fitting (10), **in that** the spring arrangement (35) acts upon an eccentric (27) which is mounted rotatably, is rotatable by means of a driver (21) and, for its part, acts upon the locking bars (16), and **in that** the transmission rod (7), when rotated, rotates the driver (21) which thereby rotates the eccentric (27).

15. A vehicle seat (1) comprising a seat part (3) and a back rest (4) which is attached by means of a fitting system (5, 7, 10, 47, 52) as claimed in one of the preceding claims to the seat part (3), is pivotable relative thereto and is lockable at different inclination settings.

## Revendications

1. Système de ferrures pour un siège de véhicule, en particulier pour un siège de véhicule automobile, comprenant au moins une ferrure (10), laquelle comprend une première partie de ferrure (11) et une deuxième partie de ferrure (12) qui peuvent être verrouillées l'une avec l'autre et peuvent tourner l'une par rapport à l'autre autour d'un axe (A), une tige de transmission (7) dont la rotation, pendant une opération de déverrouillage, déverrouille la ferrure (10) à l'encontre d'un moment généré par un ensemble de ressort (35) et suivant une courbe caractéristique (M₃₅), et un levier à main (5) pour déclencher l'opération de déverrouillage, dont l'actionnement fait tourner la tige de transmission (7), **caractérisé en ce qu'**un ressort façonné (61) agit entre un premier composant (63) et un deuxième composant (64), lesquels se déplacent, en particulier tournent, l'un par rapport à l'autre lors de l'opération de déverrouillage, le moment généré par ce ressort façonné suivant une courbe caractéristique non linéaire (M₆₁ qui produit, conjointement avec la courbe caractéristique au moins approximativement linéaire (M₃₅) de l'ensemble de ressort (35), une courbe caractéristique globale (M_{ges}), le ressort façonné (61) générant lors de l'opération de déverrouillage, en raison de la courbe caractéristique non linéaire (M₆₁), tout d'abord un moment de fermeture puis un moment d'ouverture, ou en ce qu'un ressort de rappel (54) comprenant au moins une portion façonnée (54f) agit entre la ferrure (10) et le levier à main (5), lesquels se déplacent, en particulier tournent, l'un par rapport à l'autre lors de l'opération de déverrouillage, le moment généré par ce ressort de rappel suivant une courbe caractéristique non linéaire (M_{f}) qui produit, conjointement avec la courbe caractéristique au moins approximativement linéaire (M₃₅) de l'ensemble de ressort (35), une courbe caractéristique globale (M_{ges}), la portion façonnée (54f) du ressort de rappel (54) générant lors de l'opération de déverrouillage, en raison de la courbe caractéristique non linéaire (M_{f}), tout d'abord un moment de fermeture puis un moment d'ouverture.

2. Système de ferrures selon la revendication 1, **caractérisé en ce que** le ressort façonné (61) comprend un corps de base (61a) qui est supporté sur le premier composant (63), en particulier relié de manière solidaire en rotation à celui-ci, et au moins un bras de ressort (61f) qui s'applique contre le deuxième composant (64).

3. Système de ferrures selon la revendication 2, **caractérisé en ce que** l'au moins un bras de ressort (61f) s'applique contre au moins un contour (64c) du deuxième composant (64) en un point de contact, lequel contour fait saillie radialement en direction du ressort façonné (61) et dévie l'au moins un bras de ressort (61f).

4. Système de ferrures selon la revendication 3, **caractérisé en ce que**, pendant l'opération de déverrouillage, l'au moins un bras de ressort (61f) et l'au moins un contour (64c) se déplacent l'un par rapport à l'autre et la déviation du bras de ressort (61f) et la direction d'action des forces (F) varient de ce fait.

5. Système de ferrures selon l'une quelconque des revendications 2 à 4, **caractérisé en ce que** plusieurs bras de ressort (61f) sont prévus, lesquels sont réalisés de manière identique les uns aux autres et sont disposés uniformément sur le corps de base (61a) dans la direction périphérique par rapport à l'axe (A).

6. Système de ferrures selon l'une quelconque des revendications précédentes, **caractérisé en ce qu'**une couronne dentée (17) est réalisée sur la première partie de ferrure (11), **en ce que** la deuxième partie de ferrure (12) guide des éléments de verrouillage (16) radialement déplaçables, lesquels coopèrent avec la couronne dentée (17), afin de verrouiller la ferrure (10), **en ce que** l'ensemble de ressort (35) sollicite un excentrique (27) monté à rotation et pouvant être tourné au moyen d'un élément d'entraînement (21), lequel excentrique sollicite pour sa part les éléments de verrouillage (16), et **en ce que** la tige de transmission (7) fait tourner l'élément d'entraînement (21) lors de sa rotation, lequel élément d'entraînement fait ainsi tourner l'excentrique (27).

7. Système de ferrures selon la revendication 6, **caractérisé en ce qu'**un module de butée (50) est prévu entre le levier à main (5) et la tige de transmission (7), lequel module de butée amène le levier à main (5) et l'une des parties de ferrure (11, 12) en butée l'un par rapport à l'autre dans au moins un sens de rotation, le ressort façonné (61) étant prévu entre le module de butée (50) faisant office de premier composant (63) et celle des parties de ferrure (11, 12) agissant en tant que butée ou une douille de support (48) fixée à celle-ci faisant office de deuxième composant (64).

8. Système de ferrures selon la revendication 6, **caractérisé en ce que** le ressort façonné (61) est prévu entre l'une des deux parties de ferrure (11, 12) faisant office de premier composant (63) et l'excentrique (27) faisant office de deuxième composant (64).

9. Système de ferrures selon la revendication 1, **caractérisé en ce que** le ressort de rappel (54) est réalisé à partir d'un fil métallique pour ressort avec un corps de base (54a) enroulé sous forme hélicoïdale et deux extrémités de ressort (54e).

10. Système de ferrures selon la revendication 1 ou 9, **caractérisé en ce que** la portion façonnée (54f) est réalisée sous forme de renflement en forme d'ergot sur un corps de base (54a) du ressort de rappel (54).

11. Système de ferrures selon les revendications 9 et 10, **caractérisé en ce que** la portion façonnée (54f) est réalisée en tant que renflement radial dans une dernière spire du corps de base (54a), en particulier de façon radialement opposée à l'extrémité de ressort (54e) par rapport à l'axe (A).

12. Système de ferrures selon la revendication 1 ou les revendications 9 à 11, **caractérisé en ce que** la portion façonnée (54f) coopère avec un contour (50k) associé lors de l'opération de déverrouillage, lequel contour est en particulier réalisé sur un module de butée (50).

13. Système de ferrures selon la revendication 12, **caractérisé en ce que**, pendant l'opération de déverrouillage, la portion façonnée (54f) et le contour associé (50k) se déplacent l'un par rapport à l'autre et la déviation de la portion façonnée (54f) et les directions d'action des forces (F) varient de ce fait aux points de contact, le module de butée (50) étant prévu entre le levier à main (5) et la tige de transmission (7), lequel module de butée coopère avec au moins une contre-butée (51), afin d'amener en butée l'un par rapport à l'autre le levier à main (5) et l'une des parties de ferrure (11, 12) dans au moins un sens de rotation, le ressort de rappel (54) étant d'une part supporté sur le module de butée (50) et d'autre part supporté sur le composant (12, 48) comprenant la contre-butée.

14. Système de ferrures selon la revendication 1 ou les revendications 9 à 13, **caractérisé en ce qu'**une couronne dentée (17) est réalisée sur la première partie de ferrure (11), **en ce que** la deuxième partie de ferrure (12) guide des éléments de verrouillage (16) radialement déplaçables, lesquels coopèrent avec la couronne dentée (17), afin de verrouiller la ferrure (10), **en ce que** l'ensemble de ressort (35) sollicite un excentrique (27) monté à rotation et pouvant être tourné au moyen d'un élément d'entraînement (21), lequel excentrique sollicite pour sa part les éléments de verrouillage (16), et **en ce que** la tige de transmission (7) fait tourner l'élément d'entraînement (21) lors de sa rotation, lequel élément d'entraînement fait ainsi tourner l'excentrique (27).

15. Siège de véhicule (1) comprenant une partie d'assise (3) et un dossier (4), lequel, au moyen d'un système de ferrures (5, 7, 10, 47, 52) selon l'une quelconque des revendications précédentes, est fixé à la partie d'assise (3), peut pivoter par rapport à celle-ci et peut être verrouillé avec différents réglages d'inclinaison.
